Europäisches Patentamt

European Patent Office

Office européen des brevets

(11) Veröffentlichungsnummer: **0 011 217**
**B1**

(12) **EUROPÄISCHE PATENTSCHRIFT**

(45) Veröffentlichungstag der Patentschrift:
26.08.81

(51) Int. Cl.³: **H 02 P 3/08**, G 11 B 15/22

(21) Anmeldenummer: **79104327.6**

(22) Anmeldetag: **06.11.79**

(54) Elektronische Blockiereinrichtung für Gleichstrommotoren.

(30) Priorität: **11.11.78 DE 2849110**

(43) Veröffentlichungstag der Anmeldung:
**28.05.80 Patentblatt 80/11**

(45) Bekanntmachung des Hinweises auf die Patenterteilung:
**26.08.81 Patentblatt 81/34**

(84) Benannte Vertragsstaaten:
**AT DE FR GB IT NL**

(56) Entgegenhaltungen:
**DE-B-1 216 973**
**GB-A-1 175 469**
**US-A-3 530 345**

(73) Patentinhaber: **GRUNDIG E.M.V. Elektro-Mechanische Versuchsanstalt Max Grundig, Kurgartenstrasse 37, D-8510 Fürth (DE)**

(72) Erfinder: **Bunk, Dieter, Weiherstrasse 5, D-8510 Fürth (DE)**

(74) Vertreter: **Voigt, Günter, Kurgartenstrasse 37, D-8510 Fürth (DE)**

Elektronische Blockiereinrichtung für Gleichstrommotoren

## Beschreibung

Die Erfindung bezieht sich auf eine elektronische Blockiereinrichtung für Gleichstrommotoren gemäss dem Oberbegriff des Anspruchs 1.

Beim Betrieb von motorgetriebenen Geräten für unterschiedliche Verwendungszwecke treten unterschiedliche Kräfte auf, welche sich unterschiedlich auswirken. So wirken auf die Antriebswelle des Motors unterschiedliche Drehmomentkräfte ein. Bisher wurde durch eine mechanische Bremse Einfluss auf diese Drehmomentkräfte genommen, welche teilweise von einem Hubankermagneten gesteuert wurde, um beispielsweise ein Abbremsen oder Blockieren einer erreichten Position zu bewirken.

Aus der DE-OS 26 47 230 ist eine Vorrichtung zur Steuerung und Winkelpositionierung eines Gleichstrom-Bürstenmotors bekannt, mit welcher die Bremsung eines Motors bis zu einer vorbestimmten Stelle vorgenommen werden kann. Bei dieser bekannten Vorrichtung wird der Gleichstrommotor aus einer hohen Drehzahl durch ein entsprechendes Signal auf eine langsame Drehzahl umgeschaltet. Aus dieser langsamen Drehzahl ist ein sofortiges Abstoppen des Motors bzw. Abbremsen bis zu einer vorbestimmten Stelle möglich, jedoch kein Blockieren der Motorwelle. Der Motor muss jedoch mittels eines Tachogenerators und zusätzlicher Elektronik auf die jeweilige Position eingesteuert bzw. geführt werden. Diese bekannte Vorrichtung ist jedoch deswegen aufwendig im Aufbau, wobei insbesondere das Auffinden der gewünschten Position durch eine elektronische Nachsteuereinrichtung vorgenommen wird.

Der Erfindung liegt die Aufgabe zugrunde, eine einfache elektronische Blockiereinrichtung für Gleichstrommotoren zu schaffen, welche den Motor nach Beendigung eines Abbremsvorganges oder aus dem Stillstand gegen ein verschieden stark auf die Antriebswelle einwirkendes Drehmoment in beiden Drehrichtungen sicher elektrisch blockiert und diese Stellung beizubehalten ermöglicht.

Diese Aufgabe wird erfindungsgemäss durch die im kennzeichnenden Teil des Anspruchs 1 angegebenen Merkmale gelöst.

Vorteilhafte Weiterbildungen der erfindungsgemässen Blockiereinrichtung sind in den Unteransprüchen angegeben.

Die erfindungsgemässe Einrichtung lässt sich vorteilhaft als Wickelbremse in der Tonbandgeräte-Technik und bei Bildaufzeichnungsgeräten anwenden. Insbesondere ist eine Anwendung bei Einrichtungen zum definierten Weitertransport des Bandes durch einen Capstan-Antrieb bei einer Standbildwiedergabe vom Aufzeichnungsgerät möglich. Ein Vorteil besteht auch darin, die erfindungsgemässe Einrichtung bei Magnetbanddatenspeichergeräten verwenden zu können, wobei eine mechanische bzw. elektromechanische Blockiereinrichtung für die Gleichstrommotorantriebe wegfallen kann.

Darüber hinaus zeichnet sich die erfindungsgemässe Einrichtung auch durch einfachen Aufbau aus, wobei insbesondere die Verstärker- bzw. Treiberstufe für den Gleichstrommotor durch den gemäss der Erfindung angewendeten ±-Betrieb einfach ausgebildet ist. Auch entfällt eine Nachsteuerelektronik für das Auffinden der Position des rotierenden Teils des Positionsdetektors.

Durch die erfindungsgemässe Einrichtung wird, nachdem die Motorwelle zum Stillstand gekommen ist, sofort die dann erreichte Position der Motorwelle beibehalten, d.h. die Antriebswelle sicher elektronisch blockiert.

Ein Ausführungsbeispiel der Erfindung ist in der Zeichnung dargestellt und wird zur näheren Erläuterung der Aufgabe, Vorteile und Merkmale der Erfindung im folgenden näher beschrieben. Es zeigen:

Fig. 1 eine schematische Prinzipdarstellung einer elektronischen Blockiereinrichtung gemäss der Erfindung und

Fig. 2 ein Ausführungsbeispiel der erfindungsgemässen elektronischen Blockiereinrichtung gemäss Fig. 1.

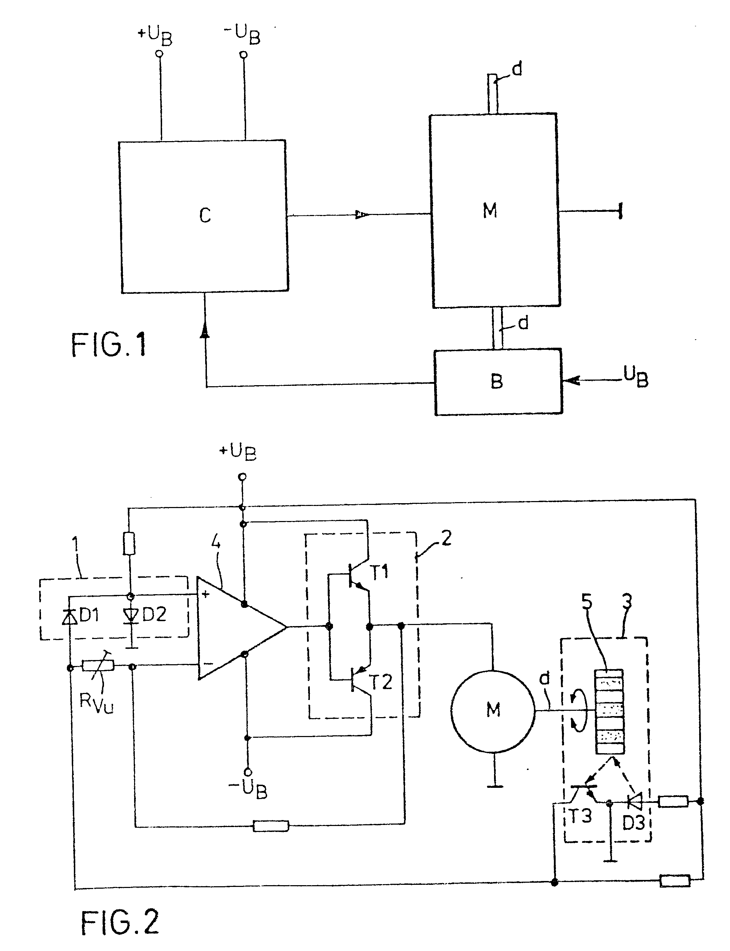

Gemäss Fig. 1, welche eine prinzipielle Anordnung einer elektronischen Blockiereinrichtung für einen Gleichstrommotor darstellt, ist eine elektronische Einrichtung C, welche an eine Gleichspannungsversorgung $U_B$ angeschlossen ist, mit einem an sich bekannten Gleichstrommotor M verbunden.

Die beiderseits des Gleichstrommotors M herausragende Antriebswelle d ist auf der einen Seite des Motors M mit einem mit der Gleichspannung $U_B$ beaufschlagten Positionsdetektor B verbunden, welcher seinerseits an die elektronische Einrichtung C geschaltet ist.

In der schematischen Prinzipdarstellung der elektrischen bzw. elektronischen Anordnung gemäss Fig. 2 ist mit der Antriebswelle d des Gleichstrommotors M ein auf dem Reflexionsprinzip beruhender opto-elektronischer Positionsdetektor 3 verbunden, welcher aus einer Leuchtdiode D 3, einem Segmentring oder einer Segmentscheibe 5 und einem Fototransistor T 3 besteht. Dieser aus den letzgenannten Elementen bestehende und mit dem Motor M verbundene opto-elektronische Positionsdetektor 3 kann auch als ein auf dem Hallprinzip oder Feldplatten-Prinzip beruhender Detektor mit Magnetpolring anstelle der Segmentscheibe ausgebildet sein, da die Wirkungsweise des Positionsdetektors 3 auf unterschiedlichem Prinzip funktionieren kann. Wichtig hierbei ist lediglich, dass ein statischer Wert der Position, d.h. der momentanen Stellung der Antriebswelle, angezeigt wird. Auch kann der opto-elektronische Positionsdetektor auf dem Durchlicht-Prinzip beruhen, wonach das von der Leuchtdiode oder einer anderen Lichtquelle ausgesandte Licht eine davor angeordnete, rasterförmig durchbrochene Segmentscheibe je nach Stellung der Segmentscheibe zur Lichtquelle durchdringt oder nicht.

Gemäss Fig. 2 wird das von der Leuchtdiode D3 ausgesandte Licht von der entlang ihres Umfanges mit hellen und dunklen Segmenten versehenen Segmentscheibe 5 reflektiert. Je grösser die Anzahl der Segmente am Umfang der Segmentscheibe 5 ist, desto grösser wird die Anzahl der Positionspunkte beim Umfang. Der Ausgang des in der Fig. 2 gestrichelt gezeichneten Positionsdetektors 3, d.h. das einem Differenzverstärker 4 zugeführte Ausgangssignal des Fototransistors T 3, liefert beim Übergang von benachbarten hellen bzw. dunklen Segmenten der Segmentscheibe 5 ein Analogsignal, welches mit einer Referenzspannung verglichen wird. Die Differenz zwischen diesen beiden Signalen wird im Differenzverstärker 4 verstärkt und steuert über eine am Ausgang des Differenzverstärkers 4 vorgesehene Treiberstufe 2 den Gleichstrommotor M. Im Ausführungsbeispiel gemäss Fig. 2 registriert der Fototransistor T 3 – nachdem die Motorwelle zum Stillstand gekommen ist – den jeweiligen Ist-Zustand der Segmentscheibe 5 des opto-elektronischen Positionsdetektors 3, der aufgrund dieser Ausbildungsform auf dem Reflexionsprinzip beruht. Das vom Fototransistor zur Steuerung der den Gleichstrommotor M versorgenden Elektronik abgegebene Signal durchläuft einen aus zwei Dioden D 1 und D 2 bestehenden Begrenzer 1, welcher seinerseits mit dem nichtinvertierenden Eingang des Differenzverstärkers 4 verbunden ist. Der invertierende Eingang des Differenzverstärkers 4 ist mit dem einen Anschluss eines veränderlichen Widerstandes $R_{Vu}$ verbunden. Am Ausgang des Differenzverstärkers 4 ist eine aus Transistoren T 1 und T 2 bestehende Treiberstufe 2 angeschlossen, welche für den Antrieb des Gleichstrommotors M in dessen Stromkreis liegt.

Aus der jeweiligen Polaritätsabweichung zur Referenzspannung am nichtinvertierenden Eingang des Differenzverstärkers 4 wird der Ausgang des Differenzverstärkers 4 mit der nachgeschalteten Treiberstufe 2 (T 1, T 2) positiv oder negativ, und rastet auf der Flanke des Hell/Dunkel-Übergangs (Positionspunkt) ein, bei der sich eine Gegenkopplung zur Bewegungsrichtung ergibt. Die Flanke der Mitkopplung wird dabei übersprungen. Der bei dieser Funktionsweise noch auftretende Restfehler der Abweichung (Gegenmoment) kann durch die mittels des veränderlichen Widerstandes $R_{Vu}$ bewirkte Verstärkungserhöhung verringert werden. D.h., die Winkeldifferenz zwischen angelegtem und nicht angelegtem Drehmoment lässt sich einstellen.

## Patentansprüche

1. Elektronische Blockiereinrichtung für Gleichstrommotoren, mit einem mit der Antriebswelle (d) des Motors (M) verbundenen Element eines Positionsdetektors (3) und einer mit einem Verstärker (4) verbundenen Treiberstufe (2) für den Motor, dadurch gekennzeichnet, dass der Positionsdetektor (3) zur Nachsteuerung des Motorstroms des Motors (M) mit einem nachgeschalteten Differenzverstärker (4) verbunden ist, wobei dem Motor (M) über die Treiberstufe (2) ein dem angelegten Drehmoment in beide Richtungen entgegenwirkender und die Position der Antriebswelle blockierender Steuerstrom zugeführt wird.

2. Elektronische Blockiereinrichtung nach Anspruch 1, dadurch gekennzeichnet, dass der Positionsdetektor (3) nach dem opto-elektronischen Reflexionsprinzip arbeitet.

3. Elektronische Blockiereinrichtung nach Anspruch 1, dadurch gekennzeichnet, dass der Positionsdetektor (3) nach dem Hall-Prinzip arbeitet.

4. Elektronische Blockiereinrichtung nach Anspruch 2, dadurch gekennzeichnet, dass der Positionsdetektor (3) eine Leuchtdiode (D 3), eine Segmentscheibe (5) als rotierendes Teil und einen Fototransistor (T 3) aufweist, der den jeweiligen Ist-Zustand der Segmentscheibe (5) erfasst.

5. Elektronische Blockiereinrichtung nach einem der vorhergehenden Ansprüche, dadurch gekennzeichnet, dass zwischen den Ausgang des Positionsdetektors (3) und einem Eingang des Verstärkers (4) ein veränderlicher Widerstand ($R_{Vu}$) geschaltet ist zur Verringerung des Restfehlers der Abweichung zwischen angelegtem und nicht angelegtem Drehmoment.

6. Elektronische Blockiereinrichtung nach einem der vorhergehenden Ansprüche 1 bis 5, dadurch gekennzeichnet, dass zwischen den Ausgang des Positionsdetektors (3) und einem Eingang des Verstärkers (4) ein Begrenzer (1 bzw. D 1, D 2) geschaltet ist.

## Claims

1. An electronic blocking device for D.C. motors comprising an element of a position detector (3) connected to the driving shaft (d) of the motor (M) and a driving stage (2) for the motor connected to an amplifier (4), characterised in that, for the feedback control of the motor current to the motor (M), the position detector (3) is connected to a differential amplifier (4) wherein a control current acting in both directions against the applied torque and blocking the position of the driving shaft is transmitted to the motor (M) through the driving stage (2).

2. An electronic blocking device according to claim 1, characterised in that, the position detector (3) operates in accordance with the opto electronic reflection principle.

3. An electronic blocking device according to claim 1, characterised in that, the position detector (3) operates in accordance with the Hall principle.

4. An electronic blocking device according to claim 2, characterised in that, the position detector (3) has a light emitting diode (D 3), a segmental disc (5) in the form of a rotating part and a phototransistor (T 3) which senses the particular actual condition of the segmental disc (5).

5. An electronic blocking device according to one of the preceding claims, characterised in that, a variable resistor ($R_{Vu}$) for reducing the residual error of the deviation between applied and non-applied torque, is connected between the output from the position detector (3) and one input to the amplifier (4).

6. An electronic blocking device according to one of the preceding claims 1 to 5, characterised in that, a limitor (1 or D 1, D 2) is connected between the output from the position detector (3) and one input to the amplifier (4).

## Revendications

1. Dispositif de blocage électronique pour moteurs à courant continu, comprenant un élément (2) d'un détecteur de position (3) relié à l'arbre (d) du moteur (M) et un étage de puissance du moteur qui est relié à un amplificateur (4), ce dispositif étant caractérisé en ce que le détecteur de position (3) est relié, pour la correction du réglage du courant du moteur (M), à un amplificateur différentiel (4) connecté en aval, un courant de commande qui travaille en opposition par rapport au couple appliqué dans les deux sens et qui bloque la position de l'arbre étant transmis au moteur (M) par l'intermédiaire de l'étage de puissance (2).

2. Dispositif de blocage électronique suivant la revendication 1, caractérisé en ce que le détecteur de position (3) travaille par réflexion optoélectronique.

3. Dispositif de blocage électronique suivant la revendication 1, caractérisé en ce que le détecteur de position (3) travaille par effet Hall.

4. Dispositif de blocage électronique suivant la revendication 2, caractérisé en ce que le détecteur de position (3) comprend une diode électroluminescente (D3), un disque à segments (5) constituant la partie tournante et un phototransistor (T3) qui capte la position instantanée du disque à segments (5).

5. Dispositif de blocage électronique suivant l'une des revendications précédentes, caractérisé en ce qu'une résistance variable ($R_{Vu}$) est intercalée entre la sortie du détecteur de position (3) et une entrée de l'amplificateur (4), pour réduire l'erreur résiduelle de la différence entre le couple appliqué et le couple non appliqué.

6. Dispositif de blocage électronique suivant l'une des revendications 1 à 5, caractérisé en ce qu'un limiteur (1, ou D1, D2) est intercalé entre la sortie du détecteur de position (3) et une entrée de l'amplificateur (4).

FIG.1

FIG.2